# EUROPEAN PATENT APPLICATION

(11) **EP 1 435 324 A2**
(43) Date of publication of application: **07.07.2004**
(21) Application number: 03250881.4
(22) Date of filing: 13.02.2003
(51) Int. Cl.: B62K 21/26

(54) **Handlebar grip**

(30) Priority: 03.01.2003 CN 03100144
(71) Applicant: International Bicycle Products Corporation, Taichung Hsien (TW)
(72) Inventor: Wu, Kuang-Hui, Tachia, Taichung Hsien (TW)
(74) Representative: Giles, Ashley Simon

(57) **Abstract**

A grip includes a tubular grip body (20) for mounting a vehicle handlebar (2). A locating member (31) is fastened to one end of the grip body (20) and partially inserted into the vehicle handlebar (2). A tightening up member (30) is inserted into the inside of the vehicle handlebar (2). A nut (45) is fastened to the tightening up member (30). A screw (46) is mounted in the locating member (31) and threaded into the nut (45) in the tightening up member (30) and adapted to drive the nut (45) and the tightening up member (30) toward the locating member (31) and to radially force the tightening up member (30) against the inside wall of the vehicle handlebar (2) when fastened up.

## Description

### BACKGROUND OF THE INVENTION

### 1. Field of the Invention

The present invention relates to a handlebar grip particularly suitable for a transportation vehicle, for example, a bicycle, motorcycle or tricycle.

### 2. Description of the Related Art

The U.S. Pat. No. 5,280,735 discloses a prior art grip for a bicycle, which includes a pliable inner sleeve and a rigid outer housing adapted to be coupled to the exterior periphery of the inner sleeve. The housing includes a pair of end caps disposed at each end thereof. The end cap has a split extending therethrough, a first cavity and a complementary cavity disposed in the periphery thereof. Each cavity has an opening which extends into the split. A screw is adapted to be disposed through either of the cavities, the opening and split, and into the remaining cavity. A nut is threaded onto an end of the screw, which extends through the opening and into the remaining cavity. As the nut is tightened on the screw, and against the opening, the width of the split is reduced, thus reducing the diameter of the end cap. As the diameter of the end cap is reduced, a gripping force is applied to the inner sleeve for preventing the grip from rotating on a handlebar to which the grip is applied.

A problem with this grip is that it do not fasten securely to the handlebar for the gripping force being not applied uniformly to the inner sleeve by the end cap thus allowing relative slippage between the grip and the handlebar.

A further disadvantage of the prior art grip is that it still needs a stopper to seal the end of the handlebar.

### SUMMARY OF THE INVENTION

It is therefore an object of the present invention to provide an improved grip, which can securely be fastened to a handlebar.

It is another object of the invention to provide a grip, which can rapidly and easily be fastened to a handlebar.

It is a further object of the invention to provide a grip, which is rapidly and easily removable from a handlebar

These and other objects and advantages of the present invention are achieved by providing an improved handlebar grip, which comprises a tubular grip body slightly larger in inner diameter than a handlebar for enabling an end thereof to be inserted into said grip body. A tightening up means is adapted to fix the grip body to the handlebar. The tightening up means comprises a locating member, a tightening up member, a screw, and female screw means. The locating member having a through hole axially extended through two ends thereof is mounted in a first end of said grip body in such a way that it is prevented from relative slippage to said grip body. The tightening up member is movably inserted into the end of the handlebar. The female screw means is disposed in said tightening up member. The screw has a head stopped on one end of said locating member and a threaded body is inserted through the through hole of said locating member and threaded into said female screw means. The locating and tightening up members are shaped in such a way that as the screw is screwed up, the tightening up member will be driven toward said locating member and forced radially against an inside wall of the handlebar to which the grip is applied.

### BRIEF DESCRIPTION OF THE DRAWINGS

FIG. 1 is an exploded view of a handlebar grip constructed according to an embodiment of the present invention;
FIG. 2 is an elevational assembly view of the handlebar grip as shown in FIG.1;
FIG. 3 is a cross-sectional side view of the handlebar grip as shown in FIG.2 with a vehicle handlebar section inserted in the grip;
FIG. 4 is a sectional view taken along line 4-4 of FIG. 3;
FIG. 5 is similar to FIG. 3 but showing the grip fixed in position;
FIG. 6 is a cross-sectional side view of a handlebar grip constructed according to another embodiment of the present invention;
FIG. 7 is similar to FIG. 6 but showing the grip fixed in position.

### DETAILED DESCRIPTION OF THE INVENTION

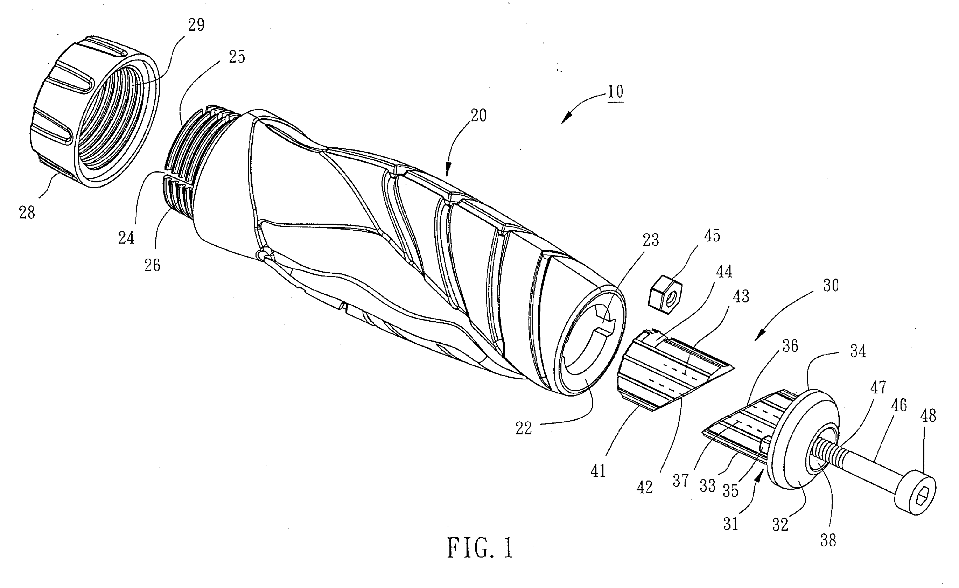

Referring to FIGS. 1∼5, there depicts an embodiment of a handlebar grip **10** within the present invention. The grip **10** includes a grip body **20**, a chuck **28**, and a tightening up means **30**.

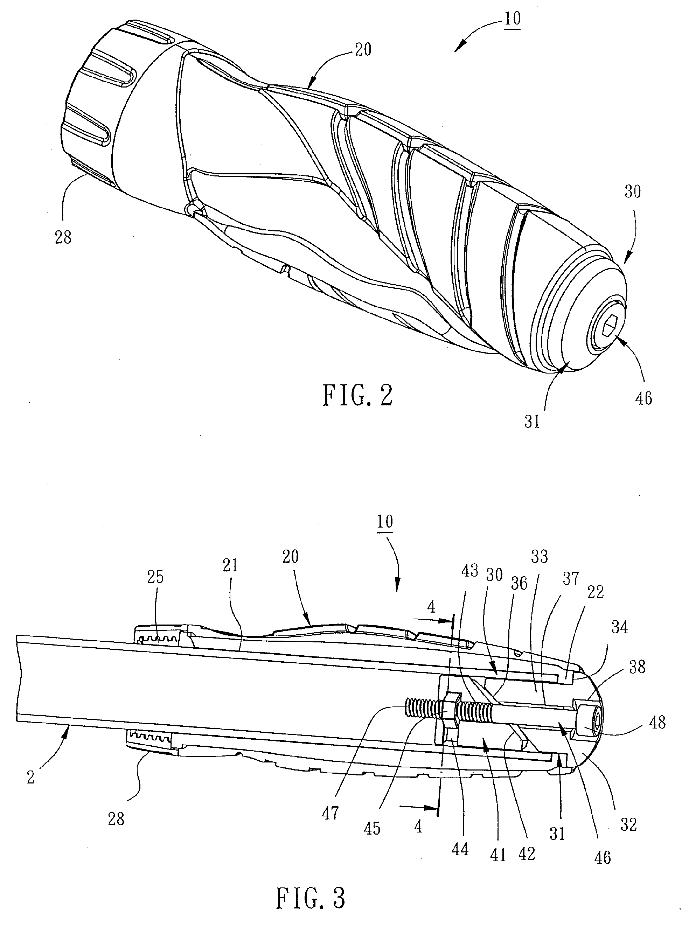

The grip body **20** is a substantially tubular member adapted to receive a handlebar 2 (as shown in FIG.3). The first end of the grip body **20** (the right end as shown in FIG. 1) has an inside annular flange **22** having two notches **23** at two opposite sides. The second end of the grip body **20** has four longitudinally extended crevices **24** equiangularly formed therein (the left end as shown in FIG. 1) to separate the second end of the grip body **20** into four pliable strips **25**. Outer threads **26** are formed in the outer walls of the pliable strips **25**.

The chuck **28** has inner threads **29** disposed in the tapered inside wall thereof and adapted to engage the outer threads **26** of the grip body **20**. The chuck **28** is mounted on the second end of the grip body **20** over the pliable strips **25**. When fastening up the chuck **28**, the four transversely arched strips **25** are radially inwardly compressed.

The tightening up means **30** includes a locating member **31**, a tightening up member **41**, a nut **45**, and a screw **46**. The locating member **31** has a head **32**, a shank **33** axially extended from one side of the head **32**, and a shoulder **34** formed between the head **32** and the shank **33**. The outer diameter of the shank **33** fits the inner diameter of the inside annular flange **22** (see FIG. 3). The shank **33** has two wedge blocks **35** symmetrically protruded from the periphery at two opposite sides and respectively abutted against the shoulder **34**, and a beveled guide face **36** at the free end (remote from the round head **32**). Further, the locating member **31** has a through hole **37** axially extended through the head **32** and the shank **33**. The head **32** has a top recess **38** around one end of the through hole **37**. The shank **33** is inserted into the first end of the grip body **20** to engage the wedge blocks **35** into the notches **23** of the inside annular flange **22** of the grip body **20**, keeping the shoulder **34** stopped against the inside annular flange **22**. When installed, the locating member **31** is prevented from slippage motion relative to the grip body **20**.

The tightening up member **41** is a cylindrical member axially disposed inside the grip body **20**. The outer diameter of the tightening up member **41** is slightly smaller than the inner diameter of the handlebar so that the tightening up member **41** can be inserted axially into the handlebar **2**. The tightening up member **41** has a beveled guide face **42** at one end adapted to compensate the beveled guide face **36** of the locating member **31**, a center through hole **43** axially extended through the ends, and an insertion hole **44** radially inwardly extended from the periphery across the center through hole **43**. The inner end of the insertion hole **44** is shaped for holding the nut **45**.

The nut **45** is inserted into the insertion hole **44** of the tightening up member **41** and leaned against the inner end of the insertion hole **44**, and prohibited from axial displacement and rotary motion relative to the tightening up member **41**.

The screw **46** has a threaded body **47** inserted from an outer side of the locating member **31** (the side corresponding to the round head **32**) through the through hole **37** of the locating member **31** and the center through hole **43** of the tightening up member **41** and threaded into the nut **45** inside the tightening up member **41**, and a head **48** fitted into the top recess **38** of the locating member **31**.

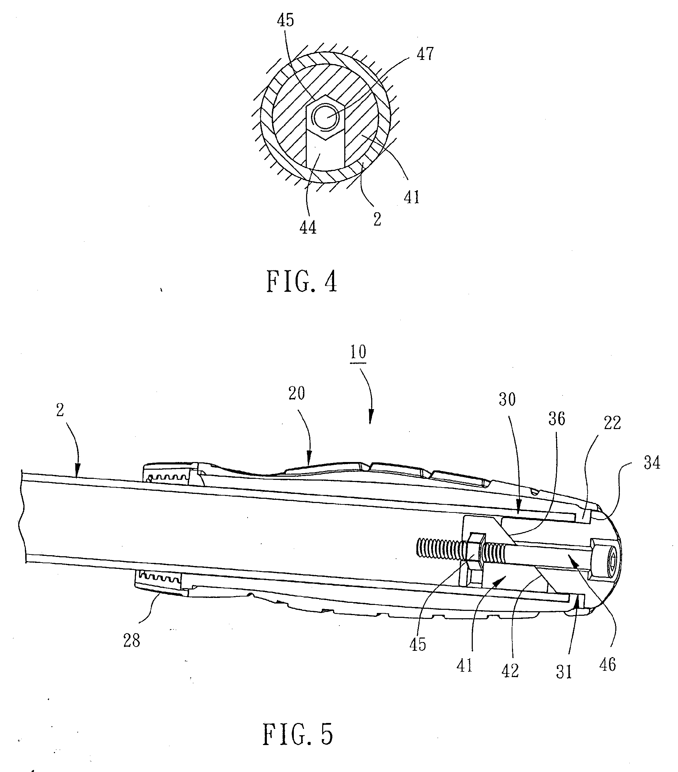

The installation procedure of the grip **10** is outlined hereinafter with reference to FIGS. 3∼5. The grip body **20** is sleeved onto the handlebar **2** to force the tightening up member **41** and the shank **33** of the locating member **31** into the inside of the handlebar **2**, keeping the pliable strips **25** extended in direction toward the handlebar **2**, the inside annular flange **22** of the grip body **20** stopped at the outer end edge of the handlebar **2** (The tightening up means **30** can of course be installed in the grip body **20** after the grip body **20** has been sleeved onto the handlebar **2**). Thereafter, when the screw **46** is screwed up, the tightening up member **41** is driven to move toward the locating member 31. For the distance between the tightening up member **41** and the locating member **31** being designed within a predetermined range, the tightening up member **41** is soon leaned against the locating member **31** (in other words, the beveled guide face **42** of the tightening up member **41** will be stopped by the beveled guide face **36** of the locating member **31**.) and prohibited from further moving. Therefore, as the screw **46** is screwed up continuously, the tightening up member **41** will be moved axially toward the locating member **31** till the beveled guide face **42** of the tightening up member **41** closely attached to the beveled guide face **36** of the locating member **31**. In this time, if the screw 46 is still screwed up, the tightening up member **41** will be radially forced against the inside wall of the handlebar 2 in reversed directions (see FIG. 5), and at the same time the inside annular flange **22** of the grip body 20 is forced inwardly against the periphery of the handlebar **2**. Finally, the chuck **28** is fastened up to compress the pliable strips **25** of the grip body **20** radially inwardly against the handlebar **2**. Thus, the grip **10** is firmly fixed to the handlebar **2**.

When removing the grip **10** from the handlebar **2**, reverse the aforesaid mounting procedure.

As indicated above, for one side (the whole axial length) of the periphery of the tightening up member **41** being forced against the inside wall of the handlebar **2**, and the pliable strips **25** of the grip body **20** being compressed radially inwardly against the handlebar **2**, the grip **10** of the present invention can be fixed securely to the handlebar **2**. Furthermore, for the whole installation procedure being done just by screwing up the screw **46** and fastening the chuck 28, the grip **10** can rapidly and easily be fastened to and removed from the handlebar **2** on which the grip **10** is installed.

In the aforesaid embodiment of the present invention, the nut **45** is an independent member inserted in the insertion hole **44** of the tightening up member **41**. Alternatively, a screw hole can be directly formed in the tightening up member **41** for receiving the screw **46**.

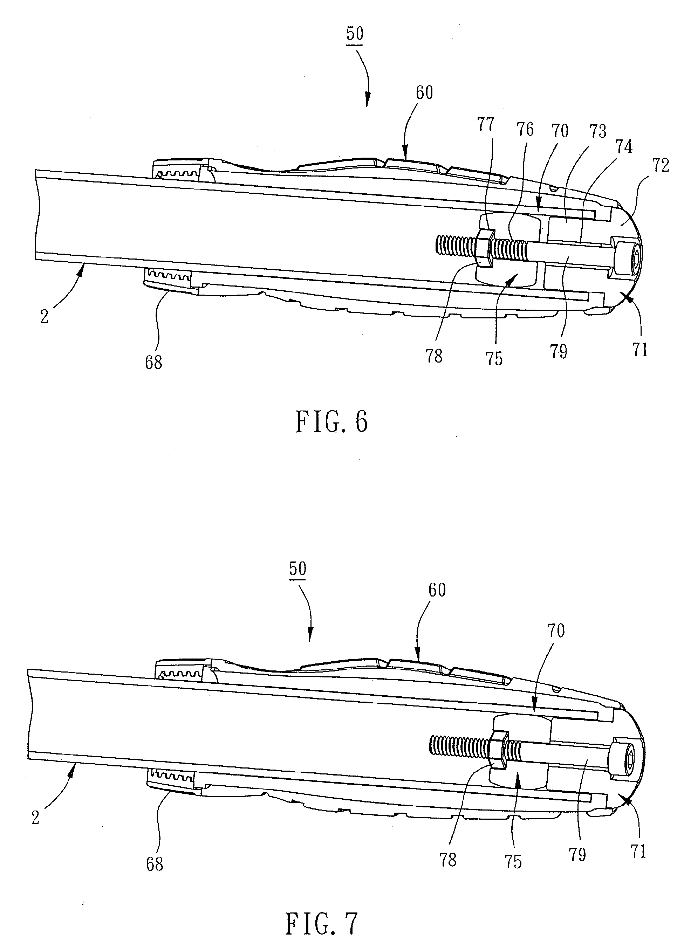

FIG. 6 shows another embodiment of the present invention. According to this embodiment, the grip **50** includes a grip body **60**, a chuck **68**, and a tightening up means **70**. The shape and relative arrangement of the grip body **60** and the chuck **68** are same as the equivalent members in the aforesaid embodiment of the present invention. The tightening up means **70** comprises a locating member **71**, a tightening up member **75**, a nut **78**, and a screw **79**. The locating member **71** has a head **72** stopped outside the grip body **60**, a shank **73** axially extended from the head **72** and inserted into the handlebar **2** inside the grip body **60**, and a through hole **74** axially extended through the head **71** and the shank **73**. The tightening up member **75** is a drum-like (or ball-like) rubber block. When not compressed, the outer diameter of the tightening up member **75** is slightly smaller than the inner diameter of the handlebar **2**. However, when axially compressed from the two ends, the tightening up member **75** is deformed, and the outer diameter of the tightening up member **75** becomes greater than the inner diameter of the handlebar **2**. The tightening up member **75** has a center through hole **76** axially extended through the ends, and a hexagonal recess **77** in the center of one end (the end remote from the locating member **71**) for accommodating the nut **78**. The screw **79** is inserted through the through hole **74** of the locating member **71** and the through hole **76** of the tightening up member **75** and threaded into the nut **78** been positioned in the hexagonal recess **77** of the tightening up member **75**.

During installation, the tightening up member **75** is inserted into the handlebar **2** (the periphery of the tightening up member **75** slightly touches the inside wall of the vehicle handlebar), and then the screw **79** is screwed up. When screwing the screw **79**, the nut **78** is driven to move along the screw bolt **79** to force the tightening up member **75** against the locating member **71**, and therefore the tightening up member **75** is deformed and radially expanded against the inside wall of the handlebar **2**, securing the grip **50** to the handlebar **2**, preventing the grip **50** from axial displacement and rotary motion relative to the handlebar **2**.

As indicated above, the present invention provides a handlebar grip that can easily and rapidly be installed in or removed from the vehicle handlebar without any special implements or tools. Therefore, the user can easily remove the grip from the vehicle handlebar for a replacement when necessary. Furthermore, because the whole axial length of the periphery of the tightening up member is forced against the inside wall of the vehicle handlebar, the grip does not slip when installed.

## Claims

1. A grip for applying to one end of a tubular vehicle handlebar, comprising:
a tubular grip body slightly larger in inner diameter than the handlebar for enabling an end thereof to be inserted into said grip body; and
a tightening up means adapted to fix said grip body to the handlebar, said tighten up means comprising a locating member mounted in a first end of said grip body in such a way that it is prevented from relative slippage to said grip body, said locating member having a through hole axially extended through two ends thereof, a tightening up member movably inserted into the end of the handlebar, female screw means disposed in said tightening up member, and a screw having a head stopped on one end of said locating member and a threaded body inserted through the through hole of said locating member and threaded into said female screw means; and
said locating member and said tightening up member shaped in such a way that as said screw is screwed up, said tightening up member will be driven toward said locating member and forced radially against an inside wall of the handlebar.

2. The grip as claimed in claim 1, wherein said locating member has a shank insertable in one end of the handlebar to which said tubular grip body is applied and a beveled guide face formed in the open end of said shank; said tightening up member has a cylindrically shaped body having a beveled guide face formed in one end thereof and facing the beveled guide face of said locating member.

3. The grip as claimed in claim 2, wherein said tightening up member has an axially extended center through hole corresponding to the center through hole of said locating member; said female screw means is a nut mounted in said tightening up member in concentric to the center through hole of said tightening up member and threaded onto the threaded body of said screw.

4. The grip as claimed in claim 3, wherein said tightening up member has an insertion hole radially inwardly extended from the periphery thereof across the center through hole of said tightening up member and adapted to accommodate said nut, said insertion hole having an inner end shaped to fit the contour of said nut.

5. The grip as claimed in claim 2, wherein said female screw means is formed integral with the center trough hole of said tightening up member.

6. The grip as claimed in claim 2, wherein the diameter of the body of said tightening up member is slightly smaller than the inner diameter of the handlebar to which said grip body is applied.

7. The grip as claimed in claim 1, wherein said tightening up member is a drum-like elastomeric block having an axially extended center through hole corresponding to the center through hole of said locating member, said tightening up member having an outer diameter slightly smaller than the inner diameter of the handlebar to which said grip body is applied before compression, said tightening up member being radially expanded and peripherally forced against an inside wall of the handlebar to which said tubular grip body is applied when axially compressed from two ends thereof; said female screw means is mounted in said tightening up member concentric to the center through hole of said tightening up member and threaded onto the threaded body of said screw, whereby when said screw is screwed up, said tightening up member will be driven toward said locating member and compressed by said locating member to radially expand against the inside wall of the handle bar.

8. The grip as claimed in claim 1, wherein said tubular grip body has an inside annular flange disposed in the first end, said inside annular flange having a notch; said locating member has a head stopped at said inside annular flange outside said tubular grip body, and a shank axially extended from said head and inserted through said inside annular flange into the inside of said tubular grip body, the shank of said locating member having a wedge block respectively engaged into the notch of said inside annular flange to prevent from relative slippage to said grip body.

9. The grip as claimed in claim 1, wherein said tubular grip body has a plurality of crevices formed in a second end thereof to separate said second end into a plurality of pliable strips, and outer threads formed on said pliable strips; the grip further comprises a chuck having a tapered inside wall, inner threads disposed on said inside wall for threading onto the outer threads of said tubular grip body, whereby when said chuck is fastened up, said pliable strips are radially inwardly compressed and firmly fixed to the handlebar.
